# EUROPÄISCHE PATENTSCHRIFT

(11) **EP 0 425 973 B1**
(45) Veröffentlichungstag und Bekanntmachung des Hinweises auf die Patenterteilung: **28.02.1996**
(21) Anmeldenummer: 90120264.8
(22) Anmeldetag: 23.10.1990
(51) Int. Cl.: C08J 9/16, C08J 9/22

(54) **Expandierbare Styrolpolymerisate und daraus hergestellte aromatenbeständige Schaumstoffe**
Expandable styrene polymerisate and aromatic-proof foam prepared therefrom
Polymère styrénique expansible et mousse résistant aux composés aromatiques en découlant

(30) Priorität: 03.11.1989 DE 3936596
(43) Veröffentlichungstag der Anmeldung: 08.05.1991
(73) Patentinhaber: BASF Aktiengesellschaft, D-67063 Ludwigshafen (DE)
(72) Erfinder: Hahn, Klaus, Dr., W-6719 Kirchheim (DE); Guhr, Uwe, Dr., W-6718 Gruenstadt (DE); Hintz, Hans, Dr., W-6700 Ludwigshafen (DE); Hoenl, Hans, Dr., W-6719 Obersuelzen (DE)

(56) Entgegenhaltungen:
- GB-A- 778 102
- GB-A- 1 182 866
- GB-A- 1 220 611
- NL-A- 6 513 552
- US-A- 3 558 534
- US-A- 3 996 311

## Beschreibung

Die Erfindung betrifft neuartige expandierbare Styrolpolymerisate für die Herstellung von aromatenbeständigen Schaumstoffen.

Schaumstoffe auf Basis von Styrolpolymerisaten haben als Wärmedämm- und Verpackungsmaterial große technische Bedeutung erlangt. Aufgrund ihrer Unbeständigkeit gegenüber Aromaten sind diese Schaumstoffe im Kraftfahrzeugbau jedoch nur bedingt einsetzbar.

In US-A-3,996,311 werden Zusammensetzungen aus einem Styrolpolymerisat und einem Copolymerisat aus Butadien und Styrol beschrieben, die durch Treibmittelzusatz expandierbar gemacht werden können. Diese Produkte weisen jedoch eine unzureichende Beständigkeit in Aromaten auf.

Der Erfindung lag die Aufgabe zugrunde, aromatenbeständige Polystyrolschaumstoffe zu entwickeln. Überraschenderweise wurde nun gefunden, daß Mischungen aus Polystyrol und vernetzten Styrol-Dien-Copolymeren zu aromatenbeständigen Schaumstoffen führen, obwohl der Hauptbestandteil Polystyrol in Aromaten löslich ist.

Gegenstand der Erfindung sind somit expandierbare Styrolpolymerisate, enthaltend
a) 10 bis 90 Gew.-% unvernetztes Polystyrol und/oder ein unvernetztes Copolymerisat mit mindestens 50 Gew.-% einpolymerisiertem Styrol,
b) 10 bis 90 Gew.-% eines vernetzten Styrol-Dien-Copolymeren mit einem Dien-Gehalt von 2 bis 45 Gew.-%,
c) 1 bis 10 Gew.-%, bezogen auf die Summe von a) und b) eines C₃- bis C₆-Kohlenwasserstoffs als Treibmittel, und gegebenenfalls
d) übliche Zusatzstoffe in wirksamen Mengen, herstellbar durch Auflösung eines unvernetzten Styrol-Dien-Copolymeren mit einem Dien-Gehalt von 10 bis 90 Gew.-% in Styrol und Polymerisation in wäßriger Suspension, wobei vor, während oder nach der Polymerisation das Treibmittel und gegebenenfalls die Zusatzstoffe zugefügt werden.

Gegenstand der Erfindung ist ferner ein Verfahren zur Herstellung derartiger expandierbarer Styrolpolymeriste, dadurch gekennzeichnet, daß man ein unvernetztes Styrol-Dien-Copolymeres mit einem Dien-Gehalt von 10 bis 90 Gew.-% in Styrol löst, in wäßriger Suspension polymerisiert und vor, während oder nach der Polymerisation das Treibmittel und gegebenenfalls die Zusatzstoffe zufügt.

Gegenstand der Erfindung sind weiterhin Schaumstoffe der Dichte 0,005 bis 0,1 g/cm³, enthaltend
a) 10 bis 90 Gew.-% Polystyrol und/oder ein Copolymerisat mit mindestens 50 Gew.-% einpolymerisiertem Styrol,
b) 10 bis 90 Gew.-% eines vernetzten Styrol-Dien-Copolymeren mit einem Dien-Gehalt von 2 bis 45 Gew.-% und gegebenenfalls
c) übliche Zusatzstoffe in wirksamen Mengen, herstellbar aus den oben beschriebenen expandierbaren Styrolpolymerisaten.

Als Hauptkomponente a) enthalten die neuen Produkte 10 bis 90 Gew.-%, vorzugsweise 20 bis 80 Gew.-%, insbesondere 30 bis 70 Gew.-% Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Polystyrol eine geringe Menge eines zu Kettenverzweigungen führenden Vernetzers einpolymerisiert, d.h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 Mol-%, bezogen auf Styrol, verwendet. Die Komponente a) ist unvernetzt, d.h. in siedendem Tolouol löslich.

Zur Erzielung einer besonders hohen Expandierbarkeit ist es zweckmäßig, daß das Styrolpolymerisat ein mittleres Molekulargewicht M_{w} (Gewichtsmittel), gemessen nach der GPC-Methode, zwischen 100 000 und 200 000 aufweist, insbesondere zwischen 130 000 und 180 000. Verbesserte Verarbeitungseigenschaften weist der Schaumstoff dann auf, wenn die hochmolekulare Flanke des nach der GPC-Methode gemessenen Molekulargewichtsteilungskurve so steil ist, daß die Differenz der Mittelwerte (M_{Z+1}-M_{Z}) weniger als 150 000 beträgt. Die GPC-Methode ist beschrieben in G. Glöckler, Polymercharakterisierung, Chromatographische Methoden Band 17, Hüthig-Verlag, Heidelberg 1982. Die genannten Mittelwerte sind beschrieben in H.G. Elias, Makromoleküle, Hüthig-Verlag, Heidelberg 1971, Seiten 52-64.

Styrolpolymerisate, die die oben genannten mittleren Molgewichte aufweisen, können durch Mitverwendung von Reglern bei der Polymerisation erhalten werden. Als Regler verwendet man zweckmäßig 0,01 bis 1,5 Gew.%, vorzugsweise 0,01 bis 0,5 Gew.%, einer bromfreien organischen Verbindung mit einer Kettenübertragungskonstante K zwischen 0,1 und 50. Zweckmäßig wird der Regler während der Polymerisation erst bei einem Umsatz von 20 bis 90 % zugefügt, um eine steile hochmolekulare Flanke der Molekulargewichtsverteilungskurve zu erzielen.

Ein vorteilhaftes hohes Expansionsvermögen läßt sich auch dadurch erzielen, daß die Komponente a) 0,1 bis 10 Gew.%,- vorteilhaft 0,5 bis 10 Gew.-%, eines Styrolpolymeren mit einem mittleren Molekulargewicht (Gewichtsmittel) zwischen 500 und 5 000 enthält.

Weitere Details der Molekulargewichtsregelung bei der Herstellung expandierbarer Styrolpolymerisate sind der EP-B 106 129 zu entnehmen.

Styrolpolymerisate, die 0,1 bis 2 Gew.%, vorzugsweise 0,15 bis 1,5 Gew.%, einpolymerisiertes Acrylnitril enthalten, führen zu Schaumstoffen, die sich durch weitgehende Schrumpffreiheit auszeichnen. Auch ein Gemisch aus 95 bis 99,5 Gew.% Polystyrol und 0,5 bis 5 Gew.% eines styrollöslichen Styrol-Acrylnitril-Copolymeren zeigt diese Eigenschaften, wenn der Gesamtgehalt an Acrylnitril im Gemisch 0,1 bis 2 Gew.%, vorzugsweise 0,15 bis 2 Gew.% beträgt.

Styrolpolymerisate, die 2 bis 15 Gew.%, insbesondere 3 bis 12 Gew.%, Maleinsäure(anhydrid) als Comonomeres enthalten, führen zu Schaumstoffen, die sich durch hohe Wärmeformbeständigkeit auszeichnen. Vorteilhaft geht man dabei von einem Gemisch aus Polystyrol und einem handelsüblichen Styrol-Maleinsäureanhydrid-Copolymeren mit einem Maleinsäureanhydridgehalt von 15 bis 49 Gew.% aus, das durch Lösen des Copolymeren in Styrol und anschließende Polymerisation leicht hergestellt werden kann.

Als erfindungswesentliche Komponente b) enthalten die neuen Produkte 10 bis 90 Gew.-%, vorzugsweise 20 bis 80 Gew.-%, insbesondere 30 bis 70 Gew.-% eines vernetzten Styrol-Dien-Copolymeren mit einem Dien-Gehalt von 2 bis 45, vorzugsweise 3 bis 30, insbesondere 5 bis 20 Gew.-%. Geeignet sind z.B. Styrol-Isopren- und insbesondere Styrol-Butadien-Copolymere. Die Copolymeren sind entweder statistisch oder vorteilhaft blockförmig aufgebaut. Pfropfcopolymere sind besonders geeignet. Die Copolymeren liegen, vermutlich im wesentlichen als Netzwerk, gleichmäßig in der Polystyrolmatrix verteilt vor. Eine derartige Verteilung wird beispielsweise dadurch erhalten, daß man von einem unvernetzten, in Styrol löslichen Copolymeren ausgeht und die styrolische Lösung polymerisiert. Dabei vernetzt das Copolymere, während gleichzeitig Styrolmoleküle auf das Copolymere aufgepfropft werden.

Die Komponente b) ist vernetzt, d.h. unlöslich in siedendem Toluol. Der Anteil an der vernetzten Komponente b) in der Mischung aus a) und b) läßt sich leicht durch Extraktion mit siedendem Toluol und Bestimmung des Toluol-unlöslichen Rückstands messen.

Die Mischung der Komponente a) und b) soll zweckmäßig einen Schmelzindex MFI 200/5,0 nach DIN 53 735 zwischen 0,2 und 15, vorteilhaft zwischen 0,3 und 8 und insbesondere zwischen 1 und 5 [g/10 min] aufweisen. Ist der Schmelzindex zu niedrig, so ist die Expandierbarkeit relativ gering, ist der Schmelzindex zu hoch, so ist die Aromatenbeständigkeit des Schaumstoffs unbefriedigend.

Als Treibmittel enthalten die expandierbaren Styrolpolymerisate 1 bis 10 Gew.-%, bezogen auf die Summe von a) und b), vorzugsweise 3 bis 8 Gew.-% und insbesondere 5 bis 8 Gew.-% eines C₃- bis C₆-Kohlenwasserstoffs, wie Propan, Butan, Isobutan, n-Pentan, Isopentan, Neopentan und/oder Hexan. Vorzugsweise wird ein handelsübliches Pentan-Gemisch verwendet.

Die expandierbaren Styrolpolymerisate können ferner übliche Zusatzstoffe in wirksamen Mengen enthalten, wie Farbstoffe, Füllstoffe, Stabilisatoren, Flammschutzmittel, Synergisten, Keimbildner, Gleitmittel, Antistatika, beim Verschäumen antiverklebend wirkende Stoffe und Mittel zur Verkürzung der Entformzeit beim Ausschäumen.

Als Zusatzstoffe sind auch Poly-(2,6-dimethyl)-1,4-phenylenether und Poly-1,4-phenylensulfid geeignet. In Mengen von 1 bis 20 Gew.%, bezogen auf die Komponente a) bewirken diese Zusätze eine Erhöhung der Wärmeformbeständigkeit des Schaumstoffs.

Die expandierbaren Styrolpolymerisate liegen im allgemeinen in Form von Partikeln, d.h. in Perlform, Granulatform oder in Form von Brocken vor und haben vorteilhaft einen mittleren Durchmesser von 0,1 bis 6 mm, insbesondere 0,4 bis 3 mm.

Die Herstellung kann beispielsweise durch Vermischen der Komponenten in der Schmelze in einem Extruder erfolgen, wobei der Strang nach dem Auspressen so rasch abgekühlt wird, daß kein Aufschäumen erfolgt, und anschließend zerkleinert wird.

Vorteilhaft erfolgt die Herstellung durch Suspensionspolymerisation in an sich bekannter Weise. Dazu wird das unvernetzte Styrol-Dien-Copolymere und gegebenenfalls die Zusatzstoffe in Styrol gelöst und diese Lösung in wäßriger Suspension polymerisiert. Vorteilhafterweise setzt man bei der Polymerisation einen Regler und/oder eine geringe Menge, etwa 0,005 bis 0,05 Mol-%, bezogen auf Styrol, eines Vernetzers zu. Das Treibmittel kann dabei bei der Polymerisation mit vorgelegt werden oder im Laufe der Polymerisation zugefügt werden. Es kann auch erst nach beendeter Polymerisation dem Ansatz zugefügt werden.

Das für die Herstellung der in a) verteilten Komponenten b) verwendete unvernetzte in Styrol löslichen Styrol-Dien-Copolymerisat wird in an sich bekannter Weise durch Copolymerisation von Styrol und einem Dien, wie Butadien oder Isopren, hergestellt. Es soll einen Gehalt an einpolymerisiertem Dien von 10 bis 90 Gew.-%, vorteilhaft 15 bis 80 Gew.-%, insbesondere 20 bis 60 Gew.-% aufweisen. Vorteilhaft verwendet man durch anionische Polymerisation hergestellte Styrol-Butadien-Blockcopolymere. Verzweigte bzw. sternförmig aufgebaute Blockcopolymere, wie sie durch Kopplung der mit alkalimetallorganischen Katalysatoren erhältlichen "living polymers" mit multifunktionellen Kopplungsmitteln entstehen, und die beispielsweise einen Diengehalt von 20 bis 45 Gew.-% und Viskositätszahlen VZ von 50 bis 130 [ml/g] (gemessen 0,5%ig in Toluol) aufweisen, werden bevorzugt. Verfahren zur Herstellung derartiger Blockcopolymere sind in der US-Patentschrift 3 281 383 und der britischen Patentschrift 985 614 beschrieben. Bei der Polymerisation der styrolischen Lösung des Styrol-Dien-Copolymeren erfolgt eine Vernetzung des Copolymeren, wobei in der Regel gleichzeitig noch weiteres Styrol aufgepfropft wird. Der Anteil an vernetztem Styrol-Dien-Copolymeren b) in der Mischung aus a) und b) ist daher in der Regel höher als die eingesetzte Menge des styrollöslichen unvernetzten Copolymeren und sein Gehalt an einpolymerisiertem Dien ist niedriger.

Die erhaltenen perlförmigen expandierbaren Styrolpolymerisate werden nach beendeter Polymerisation von der wäßrigen Phase abgetrennt, gewaschen und getrocknet.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließenden Formen zu Formteilen verschweißt werden.

Die erhaltenen Schaumstoffe weisen eine Dichte von etwa 0,005 bis 0,1 g/cm³, vorzugsweise 0,01 bis 0,05 g/cm³ auf. Auf Grund ihrer Elastizität finden sie insbesondere Verwendung für stoßdämpfende Verpackungen, als Kernmaterial für Kraftfahrzeugstopstangen, zur Innenauskleidung von Kraftfahrzeugen, als Polstermaterial, sowie als Wärme- und Schalldämmaterial.

Die in den Beispielen genannten Teile sind Gewichtsteile.

### Beispiele 1 bis 8

In einem druckfesten Rührkessel wurde eine Mischung aus 200 Teilen Wasser, 0,1 Teil Natriumpyrophosphat, 100 Teilen einer styrolischen Lösung, die die in der Tabelle angegebenen Mengen an verzweigtem Styrol-Butadien-Stern-Blockcopolymerisat (75/25 Gew.-%), Viskositätszahl 75 (ml/g), sowie die in der Tabelle angegebenen Mengen an Divinylbenzol enthält, 7,0 Teilen Pentan, 0,15 Teilen tert.-Butylperoxid, 0,45 Teilen Benzoylperoxid und 4 Teilen einer 10 %igen wäßrigen Lösung von Polyvinylpyrrolidon unter Rühren auf 90°C erhitzt, 5 Stunden bei 90°C gehalten und anschließend 2 Stunden auf 100°C und weitere 2 Stunden auf 120°C erhitzt. Nach dem Abkühlen wurde das erhaltene Perlpolymerisat mit einem mittleren Teilchendurchmesser von ca. 1 mm von der wäßrigen Phase abgetrennt, gewaschen und getrocknet.

Das erhaltene expandierbare Styrolpolymerisat wurde in einem handelsüblichen Rührvorschäumer, Typ Rauscher, mit strömendem Wasserdampf auf ein Schüttgewicht von ca. 20 g/l vorgeschäumt. Nach 24 Stunden Zwischenlagerung wurden die Schaumstoffpartikel in einer Blockform, Typ Rauscher, durch Bedampfung mit Wasserdampf und einem Druck von 1,8 bar zu einem Block der Dichte ca. 20 g/l verschweißt.

Zur Prüfung der Öl- und Aromatenbeständigkeit wurden in Anlehnung an DIN 53 428 jeweils 5 Proben des Schaumstoffs in Würfel form mit 5 cm Kantenlänge 72 Stunden in Heizöl und Toluol gelagert. Die Bewertungskriterien sind 0 = nicht verändert, 1 = gering verändert, 2 = unbeständig.

Zur Bestimmung des Gehalts an vernetztem Styrol-Dien-Copolymerisat wurde eine von Treibmittel befreite, entgaste Probe pulverisiert und 24 Stunden in einem Soxhlet-Extraktor mit siedendem Toluol extrahiert und der toluolunlösliche Anteil bestimmt.

Die Ergebnisse sind in der Tabelle zusammengefaßt.

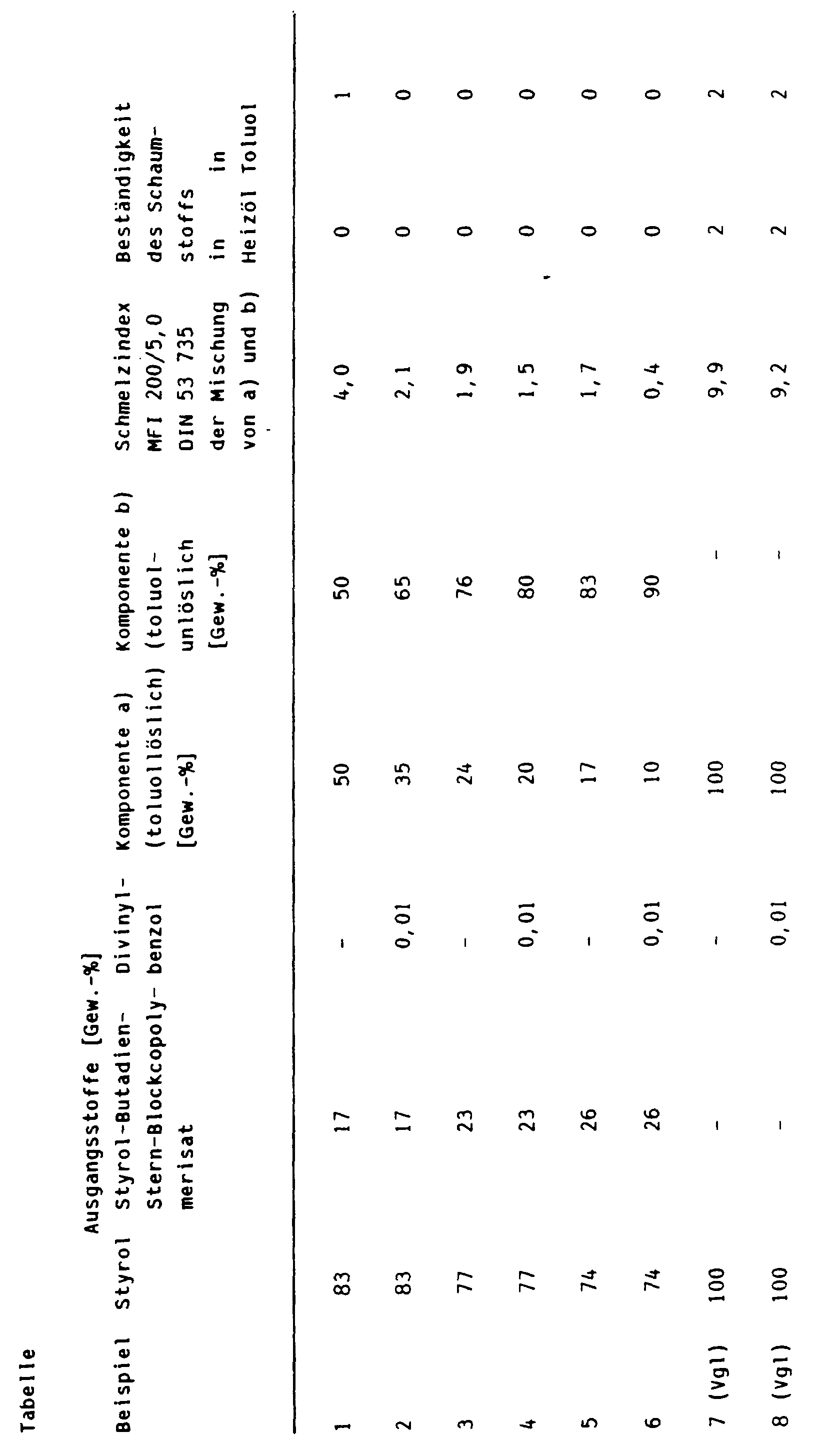

## Patentansprüche

1. Expandierbare Styrolpolymerisate, enthaltend
a) 10 bis 90 Gew.-% unvernetztes Polystyrol und/oder eines unvernetzten Styrolcopolymerisats mit mindestens 50 Gew.-% einpolymerisiertem Styrol,
b) 10 bis 90 Gew.-% eines vernetzten Styrol-Dien-Copolymeren mit einem Dien-Gehalt von 2 bis 45 Gew.-%,
c) 1 bis 10 Gew.-%, bezogen auf die Summe von a) und b) eines C₃- bis C₆-Kohlenwasserstoffs als Treibmittel, und gegebenenfalls
d) übliche Zusatzstoffe in wirksamen Mengen,
herstellbar durch Auflösung eines unvernetzten Styrol-Dien-Copolymeren mit einem Dien-Gehalt von 10 bis 90 Gew.-% in Styrol und Polymerisation in wäßriger Suspension, wobei vor, während oder nach der Polymerisation das Treibmittel und gegebenenfalls die Zusatzstoffe zugefügt werden.

2. Expandierbare Styrolpolymerisate gemäß Anspruch 1, dadurch gekennzeichnet, daß die Mischung aus a) und b) einen Schmelzindex MFI 200/5,0 nach DIN 53 735 zwischen 0,2 und 15 [g/10 min] aufweist.

3. Verfahren zur Herstellung expandierbarer Styrolpolymerisate gemäß Anspruch 1, dadurch gekennzeichnet, daß man ein unvernetztes Styrol-Dien-Copolymeres mit einem Dien-Gehalt von 10 bis 90 Gew.-% in Styrol löst, in wäßriger Suspension polymerisiert und vor, während oder nach der Polymerisation das Treibmittel und gegebenenfalls die Zusatzstoffe zufügt.

4. Schaumstoffe der Dichte 0,005 bis 0,1 g/cm³, enthaltend
a) 10 bis 90 Gew.-% unvernetztes Polystyrol und/oder ein unvernetztes Styrolcopolymerisat mit mindestens 50 Gew.-% einpolymersiertem Styrol,
b) 10 bis 90 Gew.-% eines vernetzten Styrol-Dien-Copolymeren mit einem Dien-Gehalt von 2 bis 45 Gew.-%, und gegebenenfalls
c) übliche Zusatzstoffe in wirksamen Mengen,
herstellbar aus expandierbaren Styrolpolymerisaten gemäß Anspruch 1. Verfahren zur Herstellung von Schaumstoffen gemäß Anspruch 4, dadurch gekennzeichnet, daß man expandierbare Styrolpolymerisate gemäß Anspruch 1 in Partikelform durch Erhitzen auf eine Temperatur oberhalb des Erweichungspunkts expandiert und die erhaltenen Schaumstoffpartikel in nicht gasdicht schiießenden Formen durch Erhitzen miteinander verschweißt.

## Claims

1. An expandable styrene polymer containing
a) from 10 to 90 % by weight of uncrosslinked polystyrene and/or an uncrosslinked styrene copolymer containing 50 % by weight or more of copolymerized styrene,
b) from 10 to 90 % by weight of a crosslinked styrene-diene copolymer containing from 2 to 45 % by weight of the diene,
c) from 1 to 10 % by weight, based on the sum of a) and b), of a C₃- to C₆-hydrocarbon as blowing agent, and, if desired,
d) conventional additives in effective amounts,
which can be prepared by dissolving an uncrosslinked styrene-diene copolymer containing from 10 to 90% by weight of the diene in styrene and polymerizing the material in aqueous suspension, the blowing agent and, if desired, the additives being added before, during or after the polymerization.

2. An expandable styrene polymer as claimed in claim 1, wherein the mixture of a) and b) has a melt flow index MFI 200/5.0 in accordance with DIN 53 735 of from 0.2 to 15 [g/10 min].

3. A process for the preparation of an expandable styrene polymer as claimed in claim 1, which comprises dissolving an uncrosslinked styrene-diene copolymer containing from 10 to 90 % by weight of the diene in styrene, polymerizing the material in aqueous suspension, and adding the blowing agent and, if used, the additives before, during or after the polymerization.

4. A foam which has a density of from 0.005 to 0.1 g/cm³ and contains
a) from 10 to 90 % by weight of uncrosslinked polystyrene and/or an uncrosslinked styrene copolymer containing 50 % by weight or more of copolymerized styrene,
b) from 10 to 90 % by weight of a crosslinked styrene-diene copolymer containing from 2 to 45 % by weight of diene, and, if desired,
c) conventional additives in effective amounts, which can be produced from an expandable styrene polymer as claimed in claim 1.

5. A process for the production of a foam as claimed in claim 4, which comprises expanding an expandable styrene polymer as claimed in claim 1 in particle form by heating to above the softening point, and welding the foam particles obtained to one another by heating in molds which do not close gas-tight.

## Revendications

1. Polymérisat de styrène expansible contenant
a) 10 à 90 % en poids de polystyrène non réticulé et/ou d'un copolymérisat de styrène avec au moins 50 % en poids de styrène entré en polymérisation,
b) 10 à 90 % en poids d'un copolymère styrène-diène avec une teneur en diène de 2 à 45 % en poids,
c) 1 à 10 % en poids, rapportés à la somme de a) et b) d'un hydrocarbure en C3-C6 comme gonflant et éventuellement
d) des additifs usuels en quantités efficaces
préparable par dissolution d'un copolymère styrène-diène non réticulé, d'une teneur en diène de 10 à 90 % en poids, dans du styrène et polymérisation en suspension aqueuse, le gonflant et éventuellement les additifs étant ajoutés avant, pendant ou après la polymérisation.

2. Polymérisat de styrène expansible selon la revendication 1, caractérisé par le fait que le mélange de a) et b) présente un indice de fusion MFI 200/5,0, selon DIN 53735 compris entre 0,2 et 15 (g/10 min).

3. Procédé de préparation de polymérisat de styrène expansible selon la revendication 1, caractérisé par le fait que l'on dissout dans du styrène un copolymère styrène-diène non réticulé, d'une teneur en diène de 10 à 90 % en poids, qu'on le polymérise en suspension aqueuse et on ajoute le gonflant et éventuellement les additifs avant, pendant ou après la polymérisation.

4. Matière alvéolaire de densité 0,005 à 0,1 g/cm³ contenant
a) 10 à 90 % en poids de polystyrène non réticulé et/ou d'un copolymérisat de styrène avec au moins 50 % en poids de styrène entré en polymérisation,
b) 10 à 90 % en poids d'un copolymère styrène-diène avec une teneur en diène de 2 à 45 % en poids,
c) des additifs usuels en quantités efficaces
préparable à partir de polymérisats de styrène selon la revendication 1.

5. Procédé de préparation de matières alvéolaires selon la revendication 4, caractérisé par le fait que l'on expanse des polymérisats expansibles selon la revendication 1 en forme particulaire, par chauffage à une température supérieure à la température de ramollissement et l'on soude entre elles les particules alvéolaires obtenues par chauffage dans des moules ne fermant pas de façon étanche aux gaz.
